# EUROPEAN PATENT APPLICATION

(11) **EP 1 942 242 A2**
(43) Date of publication of application: **09.07.2008**
(21) Application number: 07380379.3
(22) Date of filing: 27.12.2007
(51) Int. Cl.: E05B 1/00, E05B 65/20

(54) **Inner handgrip for vehicle doors**

(30) Priority: 27.12.2006 ES 200602780 U
(71) Applicant: Seat, S.A., 08760 Martorell, Barcelona (ES)
(72) Inventor: Veciana Sales, Rosa, c/o Seat, S.A., 08760 Martorell, Barcelona (ES); Jofré Mateos, David, c/o Seat, S.A., 08760 Martorell, Barcelona (ES); Romero Pérez, Arturo, c/o Seat, S.A., 08760 Martorell, Barcelona (ES)
(74) Representative: Carvajal y Urquijo, Isabel

(57) **Abstract**

The invention relates to an inner handgrip for vehicle doors, which is assembled in the panel (1) of the door after the armrest (2), and comprises a rotating bushing (9), with locking means, from which an arched arm (4) projects and in which a push-button (5) for releasing the mentioned locking means is assembled. The bushing (9) furthermore carries a handle (6) for opening the door.

## Description

### Field of the Invention

The present invention relates to an inner handgrip for vehicle doors, which is assembled on the panel of the door, after the armrest, and which is formed such that it integrates several functions in one and the same structure.

The handgrip of the invention can be placed in an inclined position for the use as such handgrip, and in a rest position, in which it is an extension of the armrest, extending the length thereof. The handgrip of the invention further includes the handle for opening the door. The handgrip of the invention thus integrates several utilities in one and the same structure, carrying out the handgrip function, the armrest function, at the user's discretion, and being useful as a carrier of the handle for opening the door.

### Background of the Invention

Vehicle doors are usually internally provided with handgrips assembled on the panel of said door, which handgrips can be solely designed to fulfill this handgrip function or can be designed as armrests, which have therealong an area shaped such that it can be used as a handgrip. In any case, the handgrip is fixed and does not include the handle for opening the door, which handle is usually placed on the inner side of the door.

All of the foregoing makes it necessary to assemble different elements in the panel of the door, each of which elements is designed to fulfill a specific function.

### Description of the Invention

The object of the present invention is an inner handgrip for vehicle doors, formed such that it can be used as such handgrip, such that it forms part of the armrest and furthermore such that it is the carrier of the handle for opening the door.

To that end, the handgrip of the invention, which is assembled in the panel of the vehicle door, is located from the front end of the armrest and can be swung between a rest position, in which it is an extension of the armrest, and two positions with a different inclination, at 180º and at 30º. The handgrip is thus compatible for its assembly both in the left panel and in the right panel, allowing the passenger to choose the most suitable position of the handgrip for him or her according to the situation in which he or she is.

The handgrip of the invention is formed by a tubular shaft which is perpendicularly fixed at one of its ends to the panel of the door, by a casing which is coaxially assembled around the tubular shaft, with the capacity to rotate about it, by a bushing which is coaxially assembled between the tubular shaft and the casing and projects partially with respect to said casing in a portion from which an arched arm projects radially; and by a push-button which is axially assembled in the bushing and has an axial shank partially penetrating through the tubular shaft, the push-button being visible through the outer base of the bushing.

The bushing and the tubular shaft are connected to one another by means allowing the partial rotation of the bushing with respect to the tubular shaft, but not its relative axial movement.

The push-button and bushing in turn have mutual retaining means allowing the axial movement of the push-button with respect to the bushing between an outer locking position, in which it prevents the rotation of the bushing, and an inner release position, in which it allows the partial rotation of said bushing. The shaft is constantly driven towards the outer locking position by means of a spring.

With the commented arrangement, when the push-button is in the outer locking position, the bushing is locked, without the possibility of rotation, and the arched arm projecting therefrom is an extension of the armrest, whereas when the push-button is pressed and moved to the inner position, the bushing can freely rotate and with it, the arched arm projecting therefrom, so as to place it in a 30º or 180º inclined position.

### Brief Description of the Drawings

The features set forth, as well as others typical of the invention, are described below in more detail, with the aid of the attached drawings, in which a non-limiting embodiment is shown.

In the drawings:
Figure 1 is a perspective view of a handgrip formed according to the invention, assembled inside the panel of a vehicle door, and placed as an extension of the armrest.
Figure 2 is a view similar to Figure 1, in which the handgrip is placed in an inclined position with respect to the armrest 1.
Figure 3 is a perspective exploded view of the handgrip of the invention.
Figure 4 is a diametrical section of the handgrip, taken according to section line 4-IV of Figure 1.
Figure 5 is a partial cross-section of the handgrip, according to section line 5-V of Figure 4 and with the arched arm as an extension of the armrest.
Figure 6 is a view similar to Figure 5, with the arched arm inclined with respect to the armrest.
Figure 7 is a partial cross-section of the handgrip, taken according to section line 7-VII of Figure 4.

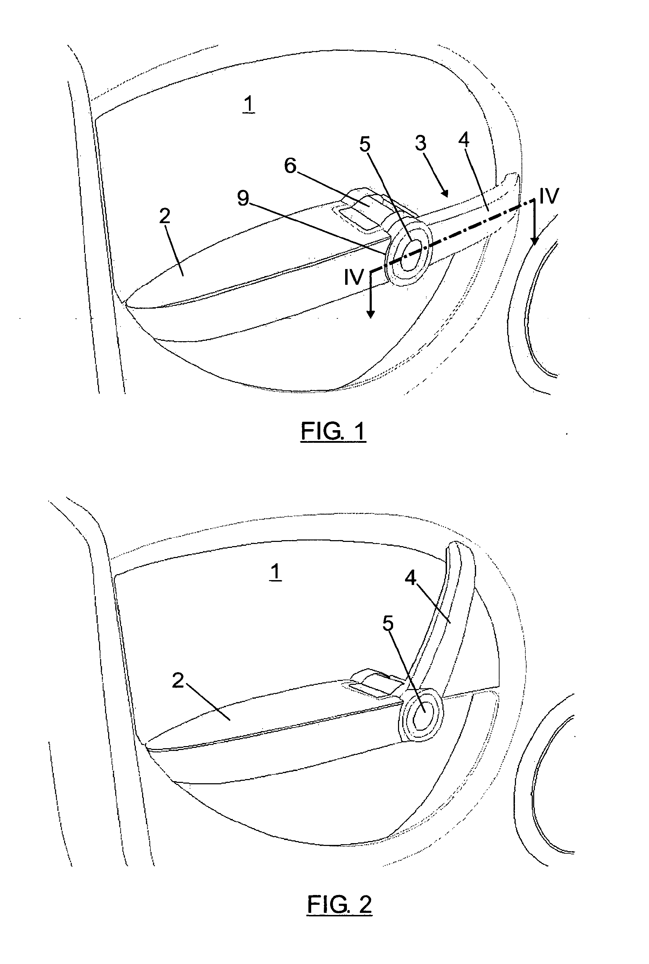

Figure 1 shows the panel 1 of a vehicle door, in which an armrest 2 is assembled. The handgrip of the invention, generally referenced with number 3, is assembled after the armrest 2, which handgrip includes an arched arm 4 which in Figure 1 is aligned with the armrest 2, extending the dimension thereof. In Figure 2 the arched arm 4 is in an inclined position with respect to the armrest 2.

To pass the arched arm 4 from the position of Figure 1 to the inclined position of Figure 2, it will be necessary to act on an actuation push-button 5 so as to release certain locking means, as will be explained below.

The handgrip 3 of the invention further incorporates the handle 6 for opening the door.

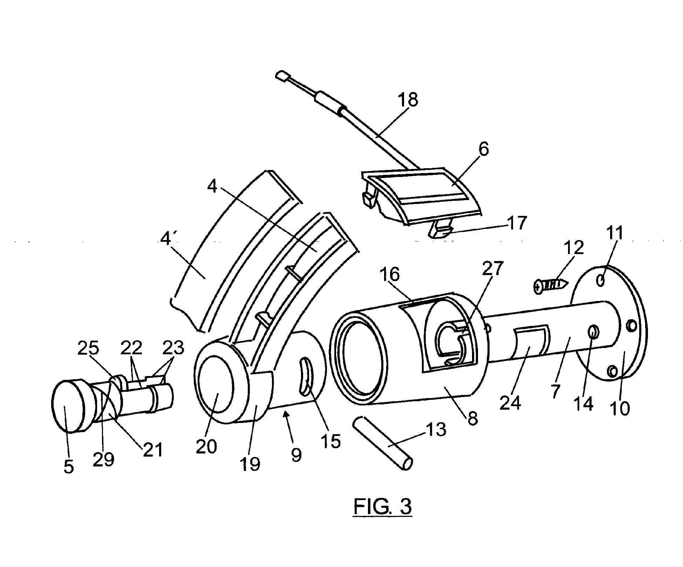

As can best be seen in Figure 3, the handgrip of the invention is formed by a tubular shaft 7, a casing 8, a bushing 9 and the actuation push-button 5, all of them coupled coaxially to one another.

The tubular shaft 7 is finished at one of its ends in a circular plate 10 provided with holes 11 for the passage of screws 12 for the fixing to the panel 1 of the door. The casing 8 with the capacity to rotate is assembled around this tubular shaft. The bushing 9 is in turn coaxially assembled between the tubular shaft 7 and the casing 8, with the freedom of partial rotation with respect to them, but without the possibility of axial movement. To that end, the bushing 9 and tubular shaft 7 are traversed by a diametric pin 13 which is introduced through diametrically opposite circular holes 14 made in the wall of the tubular shaft 7 and through oblong holes 15 made in a peripheral direction in the wall of the bushing 9. The length of these oblong holes 15 will determine the angle of rotation of the bushing 9 with respect to the shaft 7.

The casing 8 has a window 16 in which the handle 6 for opening the door is assembled, for example by means of flexible lugs 17. A Bowden cable 18 starts from this handle 6, for the connection with the lock of the door.

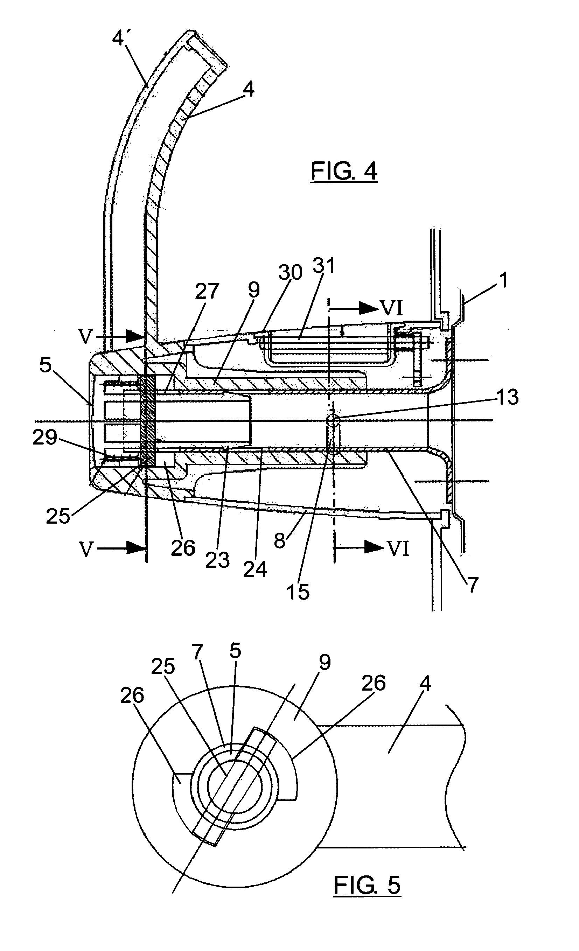

As can be seen in Figure 3, the bushing 9 has an end portion 19 with a larger diameter than the inner diameter of the casing 8, this portion 19 acting as a stop to limit the penetration of the bushing in the casing. The arched arm 4 with the ornamenting lid 4 projects from this portion 19. The oblong hole 15 of the bushing 9 will have a length such that it allows the rotation of said bushing in a magnitude that is sufficient to place the arched arm 4 in a horizontal position, shown in Figure 1, in extension with the armrest 2, or in the inclined position of Figure 4.

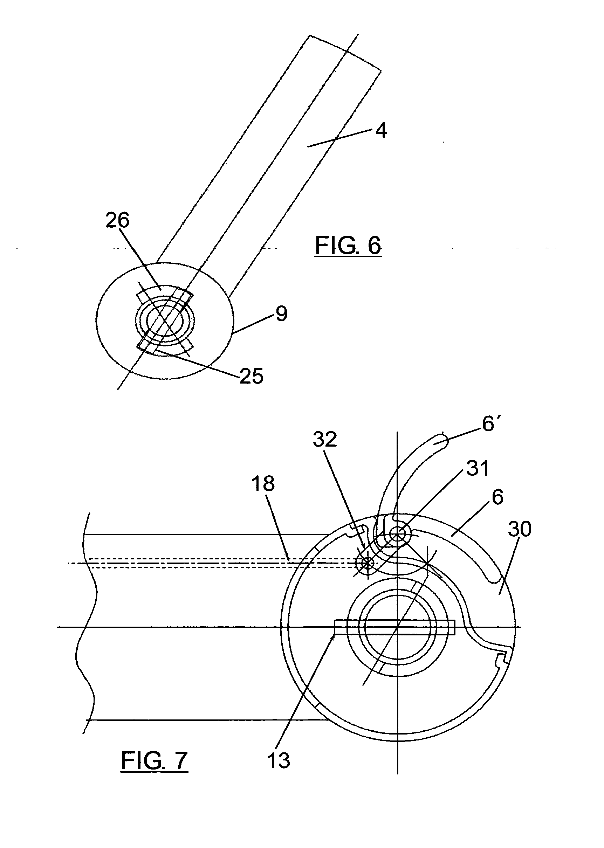

The push-button 5 is assembled inside the bushing 9, from the base directed towards the casing 8, being flush with the open base 20 of the bushing, or slightly retracted therefrom, as can be seen in Figure 4. This push-button has an axial shank 21 from which there project two parallel lugs 22 which are finished at their free end in respective outer conical enlargements 23. The lugs 22 of the shank 21 are introduced through the tubular shaft 7, such that the conical enlargements 23 are located in coincidence with windows 24 which the wall of the tubular shaft 7 has and through which it projects. The shank 21 of the push-button 5 further includes a key 25 which is housed in a key slot 26 formed internally by the bushing 9, as can be seen in Figures 5 and 6. Due to the key 25, the push-button 5 is prevented from moving towards the outside of the bushing 9. The angular width of the key slot 26 allows the rotation of the bushing 9 with respect to the push-button 5, so as to allow the arched arm 4 to occupy the positions of Figures 1 and 2. The push-button 5 is prevented from rotation with respect to the shaft 7 since the conical enlargements 23 are introduced in the windows 24. The shaft 7 has, from the free end, an axial groove 27 through which the key 25 will be able to move, upon introducing the push-button 5 towards the inside of the bushing 9, as will be explained with reference to Figure 4.

As can be seen in this Figure 4, in this case the push-button 5 is introduced through the outer base of the bushing 9, the key 25 being housed inside the key slot 26 and traversing the axial grooves 27 of the tubular shaft 7, Figure 3. At the same time, the conical enlargements 23 are located in coincidence with the windows 24 of the tubular shaft 7, acting as stops which will prevent its accidental exit. At the same time, these conical enlargements 23 will be supported against the inner surface of the bushing 9, preventing its rotation. If the push-button 5 is moved towards a more inner position, the conical enlargements 23 penetrate the tubular shaft 7 and cause the partial bending of the lugs 22 towards the inside, until the key 25 reaches the bottom of the key slot 26. In this situation, the conical enlargements 23 stop being supported against the wall of the bushing 9, so that the later can freely rotate and with it, the arched arm 4, so as to move it from the horizontal position shown in Figure 1 to the inclined position of Figure 2, for example.

The push-button 5 is constantly driven towards the outermost position, shown in Figure 4, by means of a spring 29 which is assembled around the shank 21 of the push-button 5. Thus, after having moved the push-button 5 towards the inside and having rotated the arm 4, when said push-button is stopped being pressed, it recovers the position of Figure 4, in which the conical enlargements 23 will again lock the bushing 9, preventing its rotation.

Figure 5 shows the position of the key 25 inside the key slot 26 when the arched arm 4 occupies the horizontal position of Figure 1, whereas Figure 6 shows the position of the key slot 26 with respect to the key 25 when the arm 4 rotates towards the inclined position.

Finally, Figure 7 shows the assembly of the handle 6 in the window 16 of the casing 8, Figure 3. The handle 6 is assembled in a support 30 which is coupled on the window 16 of the casing 8. This assembly is carried out by means of a pivoting shaft 31 which allows swiveling the handle 6 between a down position and another removed position 6'. In this movement, the action is through a lever 32 on the cable 18 which will act in the lock of the door.

With the described constitution, when the push-button 5 is not pressed, the rotation system of the arm 4 is locked by the conical enlargements 23 exerting pressure on the wall of the bushing 9. When the push-button 5 is pressed, the spring 29 is compressed and the key 25 slides through the grooves 27, while at the same time the conical enlargements 23 move along the windows 24 and partially penetrate the tubular shaft 7, which forces the retraction of the flanges until they stop pressing on the bushing 9, allowing its rotation and that of the arm 4, which can swivel between the horizontal position of Figure 1 and the inclined position of Figure 2.

## Claims

1. An inner handgrip for vehicle doors, which is assembled in the panel (1) of the door after the armrest (2), **characterized in that** it comprises a tubular shaft (7) fixed perpendicularly at one end to the panel of the door; a casing (8) assembled coaxially around the tubular shaft; a bushing (9) which is coaxially assembled between the tubular shaft and the casing, with the possibility of rotation, and projects partially with respect to said casing (8) in a portion (19) with an outer section greater than the inner section of the casing, from the portion of which an arched arm (4) projects radially; and a push-button (5) which is axially assembled in the bushing, visible through the outer base thereof, and has an axial shank (21) penetrating partially through the tubular shaft (7); the bushing and tubular shaft of which are connected by means allowing the partial rotation of the bushing with respect to the tubular shaft, but not its axial movement; and the push-button (5) and bushing (9) of which having mutual retaining means allowing the axial movement of the push-button with respect to the bushing between an outer locking position, in which it prevents the rotation of the bushing, and an inner release position, in which it allows the partial rotation of said bushing, the push-button being driven towards the outer locking position by means of a spring (29).

2. A handgrip according to claim 1, **characterized in that** the mentioned casing (8) has in its wall a window (16) in which a handle (6) for opening the door is assembled.

3. A handgrip according to claim 1, **characterized in that** the means connecting the bushing (9) and the tubular shaft (7) consist of a pin (13) diametrically traversing the shaft and the bushing through circular holes (14) made in the wall of the shaft and through oblong holes (15) made in the peripheral direction in the wall of the bushing, which extend in an arch determining the angle of rotation of said bushing.

4. A handgrip according to claim 1, **characterized in that** the mutual retaining means between the push-button (5) and bushing (9) consist of a key (25) projecting peripherally from the shank (21) of the push-button and housed in a key slot that the bushing has in its inside and traversing the tubular shaft (7) through an axial groove (27); the key slot of which allows the partial rotation of the bushing with respect to the push-button, as well as the axial movement of said push-button between the mentioned outer locking and inner release positions.

5. A handgrip according to claims 1 and 4, **characterized in that** the retaining means between the push-button and bushing further includes two lugs (22) projecting axially from the shank of the push-button and which can be elastically deformed in a transverse direction, the shanks of which have externally at their end respective conical enlargements (23) projecting through as many other opposing windows (24) which the wall of the tubular shaft has which are supported against the wall of the bushing, so as to lock it; said enlargements (23) partially penetrating the tubular shaft (7) when said push-button (5) occupies the mentioned release position, the lugs bending towards the inside and retracting the outer conical enlargements until the bushing stops being supported on the wall, so as to release it.

6. A handgrip according to claim 1, **characterized in that** the tubular shaft (7) has at the end adjacent to the door a circular base or enlargement (10) provided with holes (11) for the passage of screws (12) for the fixing to said panel.

7. A handgrip according to claim 4, **characterized in that** the mentioned key slot (26) has a depth equal to the magnitude of the axial movement of the push-button (5) and has a contour defining an arch with a width coinciding with the angle of rotation of the bushing.

8. A handgrip according to claim 1, **characterized in that** the tubular shaft (7) has in its wall, from the end opposite to the end for the fixing to the door, two diametrically opposite axial grooves (27) through which the key (25) of the push-button can move when said push-button is moved between the locking and release positions.
